# EUROPÄISCHE PATENTSCHRIFT

(11) **EP 4 574 575 B1**
(45) Veröffentlichungstag und Bekanntmachung des Hinweises auf die Patenterteilung: **11.02.2026**
(21) Anmeldenummer: 24218728.4
(22) Anmeldetag: 10.12.2024
(51) Int. Cl.: B60R 9/06

(54) **HECKTRÄGERSYSTEM FÜR REISEMOBILE UND VERFAHREN ZUR BEFESTIGUNG EINES HECKTRÄGERSYSTEMS**
REAR CARRIER SYSTEM FOR MOTORHOMES AND METHOD FOR ATTACHING A REAR CARRIER SYSTEM
SYSTÈME DE SUPPORT ARRIÈRE POUR CAMPING-CAR ET PROCÉDÉ DE FIXATION D'UN SYSTÈME DE SUPPORT ARRIÈRE

(30) Priorität: 21.12.2023 DE 102023213152
(43) Veröffentlichungstag der Anmeldung: 25.06.2025
(73) Patentinhaber: Consultant Plus GmbH, 09113 Chemnitz (DE)
(72) Erfinder: Frister, Tilo, 13053 Berlin (DE)
(74) Vertreter: Ramrath, Lukas

(56) Entgegenhaltungen:
- US-A1- 2007 102 464
- US-B1- 6 308 874
- US-B1- 8 640 933

## Beschreibung

Die Erfindung betrifft ein Heckträgersystem für Reisemobile und ein Verfahren zur Befestigung eines Heckträgersystems.

Aus dem Stand der Technik bekannt sind Heckträgersysteme für Reisemobile, die im montierten Zustand im Heckbereich des Fahrzeugs angeordnet sind. Diese dienen zum Transport von Lasten wie z.B. einem Fahrrad oder einem Motorrad. In der Regel werden solche Heckträgersysteme nachgerüstet, d.h. nachträglich an einem Reisemobil montiert.

So beschreibt die US 3,531,006 A einen Träger, der an verschiedene Größe und Formen motorisierter Fahrzeuge wie z.B. Wohnmobile angepasst werden kann.

Bekannte Heckträgersysteme werden an die Dachfläche oder eine Fahrzeugrückwand angeschraubt, wobei zumindest ein Gegenlager für die Schraubverbindung benötigt wird. Hierdurch wird jedoch das Reisemobil beschädigt, insbesondere dessen in der Regel mehrschichtiger Wandaufbau. Die notwendige Durchdringung der Außenwand kann auch dazu führen, dass in unerwünschte Weise Wasser in den Innenraum eintritt. Auch kann eine Haltbarkeit von laminierten Verbindungen / Verklebungen der Wandschichtmaterialien durch einen solchen Wassereintritt beeinträchtigt werden. Bei dynamischer Belastung können Kerbbelastungen an den Innen- und Aussenseiten der Durchgangsöffnungen auftreten.

Ferner benötigt eine solche Befestigung in der Regel Bauraum und auch weitere Bauteile wie das genannte Gegenlager, was die Montagekosten für derartige Heckträgersysteme erhöht. Auch können die notwendigen Revisionszugänge für die Schraubverbindungen Einschränkungen bei der Innenraumgestaltungen bedingen.

Die US 2007/0102464 A1 offenbart einen Lastenträger für Kraftfahrzeuge, insbesondere einen Lastenträger mit schwenkbaren Elementen zur Erleichterung des Be- und Entladens.

Die US 6,308,874 B1 offenbart eine Dachträgeranordnung und insbesondere eine Dachträgeranordnung, die auf einem Fahrzeug eingesetzt wird und die selektiv beweglich ist, um es einem Benutzer oder Bediener der Anordnung zu ermöglichen, relativ einfach und schnell Gegenstände auf/von der Anordnung zu laden bzw. zu entladen.

Die US 8,640,933 B1 offenbart ein Lagergestell, insbesondere ein Fahrzeuglagergestell, das das Laden von Gegenständen auf dem Dach eines Fahrzeugs erleichtert, wobei das Fahrzeuglagergestell beweglich angeordnet ist, um ein leichteres Laden zu ermöglichen.

Es stellt sich daher das technische Problem, ein Heckträgersystem für Reisemobile und ein Verfahren zur Befestigung eines solchen Heckträgersystems zu schaffen, welche zumindest eines der vorgenannten Probleme löst und welche insbesondere eine einfache und zerstörungsfreie Befestigung eines Heckträgersystems an einem Reisemobil und eine zuverlässige Abtragung von Lasten bzw. Momente ermöglichen. Ferner soll eine Montage ohne zusätzliche Bauraumanforderungen, Einschränkungen der Innenraumgestaltung und in kostengünstiger Weise ermöglicht werden.

Die Lösung des technischen Problems ergibt sich durch die Gegenstände mit den Merkmalen der unabhängigen Ansprüche. Weitere vorteilhafte Ausgestaltungen ergeben sich aus den Unteransprüchen.

Vorgeschlagen wird ein Heckträgersystem für Reisemobile. Das Heckträgersystem wird im Bereich des Fahrzeughecks am Reisemobil montiert. Ein Reisemobil kann ein Fahrzeug bezeichnen, welches auf Reisen als Unterkunft dienen kann und hierzu eine zum Wohnen geeignete Inneneinrichtung aufweisen kann.

Das Heckträgersystem umfasst mindestens einen Trägerkörper. Der Trägerkörper kann ein Grundgerüst des Heckträgersystems bilden. An dem Trägerkörper können Anbauteile wie z.B. ein Fahrradträgerschienensystem oder eine Trägerplatte für Lasten befestigt werden.

Der Trägerkörper kann eine Vielzahl von Streben umfassen, insbesondere mindestens eine Vertikalstrebe und/oder mindestens eine Horizontalstrebe und/oder mindestens eine Längsstrebe und/oder mindestens eine Diagonalstrebe. Eine Strebe im Sinne dieser Erfindung bezeichnet ein Bauelement zur Kraftübertragung. Eine Strebe kann als Profilelement ausgebildet sein. Ein solches Profilelement kann z.B. einen kreisförmigen oder einen rechteckigen Querschnitt aufweisen und weiter insbesondere auch ein Hohlprofil sein. Eine Strebe kann aus Kunststoff oder aus Metall ausgebildet sein. Der Trägerkörper kann Streben mit voneinander verschiedenen Profilen aufweisen.

Im am Reisemobil montieren Zustand des Heckträgersystems kann
- eine Mittelachse einer Vertikalstrebe parallel zur Fahrzeughochachse orientiert sein oder eine Orientierung dieser Mittelachse nicht mehr als 15° von der Fahrzeughochachse abweichen,
- eine Mittelachse einer Horizontalstrebe parallel zur Fahrzeugquerachse orientiert sein oder eine Orientierung dieser Mittelachse nicht mehr als 15° von der Fahrzeugquerachse abweichen,
- eine Mittelachse einer Längsstrebe parallel zur Fahrzeuglängsachse orientiert sein oder eine Orientierung dieser Mittelachse nicht mehr als 15° von der Fahrzeuglängsachse abweichen.

Eine Orientierung einer Mittelachse einer Diagonalstrebe kann Anteile der Orientierung einer Mittelachse einer Vertikalstrebe und/oder einer Horizontalstrebe und/oder eine Längsstrebe aufweisen.

Der Trägerkörper kann auch mindestens ein Verbindungselement zur Verbindung von zwei Vertikalstreben umfassen. Ein solches Element kann insbesondere eine Horizontalstrebe sein. Allerdings kann ein Verbindungselement auch in davon verschiedener Weise ausgebildet sein, z.B. als ein plattenförmiges Element.

Verschiedene Streben und/oder Verbindungselemente können hierbei als separate Bauelemente ausgebildet und mechanisch verbunden bzw. aneinander befestigt sein. Eine (mechanische) Verbindung/Befestigung im Sinne dieser Erfindung kann eine lösbare, aber auch eine unlösbare, Verbindung/Befestigung sein. Beispiele für eine lösbare Verbindung sind z.B. eine Rastverbindung, eine Klemmverbindung oder eine Schraubverbindung. Beispiele für eine unlösbare Verbindung sind z.B. eine Klebeverbindung oder eine Schweißverbindung. Die Verbindung kann eine formschlüssige, eine kraftschlüssige und/oder eine stoffschlüssige Verbindung sein. Die zu verbindenden Bauteile können korrespondierende Verbindungselemente aufweisen, die zur Herstellung der mechanischen Verbindung miteinander wechselwirken. Ein Beispiel für korrespondierende Verbindungselemente ist ein Gewinde und eine Schraube. Nachfolgend bezeichnet eine Befestigung, sofern nicht anders angegeben, die Herstellung einer mechanischen Verbindung.

Verschiedene Streben und/oder Verbindungselemente des Trägerkörpers können auch einteilig ausgebildet sein. Dies kann bedeuten, dass diese aus einem einzigen Materialstück oder einzigen Teil und nicht aus mehreren voneinander verschiedenen Teilen bestehen. So kann ein einteiliger Körper als monolithischer, also zusammenhängender und nicht zerstörungsfrei teilbarer, Körper ausgebildet sein.

Vorzugsweise umfasst der Trägerkörper mindestens zwei parallel zueinander verlaufende Vertikalstreben, die durch mindestens ein horizontales Verbindungselement mechanisch verbunden sind. Diese Vertikalstreben erstrecken sich im monierten bzw. angebauten Zustand in Vertikalrichtung. An einem ersten Ende einer Vertikalstrebe kann eine Längsstrebe angeordnet oder ausgebildet sein. Das erste Ende kann ein im montierten Zustand dachseitiges, also oberes Ende, der Vertikalstrebe sein.

Der Trägerkörper kann freie Enden aufweisen. Im Sinne dieser Erfindung kann, wenn nicht ausdrücklich anders erläutert, der Begriff "aufweisen" auch die Bedeutung der Begriffe "ausbilden" oder "umfassen" haben. Diese freien Enden können, wie nachfolgend noch näher erläutert, am Reisemobil befestigt werden. Insbesondere kann der Trägerkörper mindestens ein erstes, dachseitiges freies Ende und mindestens ein weiteres, gestellseitiges freies Ende aufweisen. Im montierten Zustand, der auch als vollständig montierter Zustand bezeichnet werden kann, ist das Heckträgersystem im Bereich des dachseitigen freien Endes an einer Dachfläche und im Bereich des weiteren gestellseitigen freien Endes am Fahrzeuggestell befestigt. In einem teilmontierten Zustand kann das Heckträgersystem Bereich des weiteren gestellseitigen freien Endes am Fahrzeuggestell befestigt sein, wobei das Heckträgersystem aber im Bereich des dachseitigen freien Endes nicht an der Dachfläche befestigt ist. Im teilmontierten Zustand kann das Heckträgersystem dennoch nutzbar sein, allerdings in einer im Vergleich zum montierten Zustand eingeschränkten Weise.

Ein dachseitiges freies Ende des Trägerkörpers kann insbesondere von der erläuterten Längsstrebe ausgebildet sein.

Das Heckträgersystem weist weiter mindestens ein gestellseitiges Befestigungselement zur Befestigung des Heckträgersystem an einem Fahrzeuggestell des Reisemobils auf. Insbesondere kann der Trägerkörper dieses gestellseitige Befestigungselement aufweisen oder mit diesem mechanisch verbunden sein. Dieses gestellseitige Befestigungselement kann an dem erläuterten gestellseitigen freien Ende des Trägerkörpers oder im Bereich dieses freien Endes angeordnet sein. Das gestellseitige Befestigungselement dient in bekannter Weise zur Befestigung an einem Abschnitt des Fahrgestells, insbesondere an einem Längsträger, einem Querträger oder einer mit dem Fahrgestell mechanisch verbundenen Anhängerkupplung. Auch kann das gestellseitige Befestigungselement an einem Trägerverlängerungselement befestigt werden. Insbesondere kann ein solches Befestigungselement als Befestigungsarm ausgebildet sein, der in einen Befestigungsschuh eingeführt wird, wobei dieser Befestigungsschuh am Fahrgestell befestigt, insbesondere mit diesem verschraubt, ist. Der Befestigungsarm kann im eingeführten Zustand dann am Befestigungsschuh befestigt werden. Vorzugsweise umfasst das Heckträgersystem mehrere gestellseitige Befestigungselemente, insbesondere genau zwei gestellseitige Befestigungselemente.

Weiter umfasst das Heckträgersystem mindestens ein dachseitiges Befestigungselement zur Befestigung des Heckträgersystems an der Dachfläche des Reisemobils. Das dachseitige Befestigungselement dient zur Befestigung des Heckträgersystems, insbesondere des Trägerkörpers, an der Dachfläche des Reisemobils. Insbesondere kann der Trägerkörper dieses dachseitige Befestigungselement aufweisen oder mit diesem mechanisch verbunden sein. Dieses kann an dem erläuterten dachseitigen freien Ende des Trägerkörpers oder im Bereich dieses freien Endes angeordnet oder an diesem befestigt sein. Vorzugsweise umfasst das Heckträgersystem mehrere dachseitige Befestigungselemente und somit mehrere Befestigungsflächen, z.B. zwei oder vier Befestigungselemente.

Weiter weist das mindestens eine dachseitige Befestigungselement eine Klebefläche zur Aufbringung eines Klebmaterials auf. Zur Befestigung an der Dachfläche wird das dachseitige Befestigungselement dann mit der Klebefläche an die Dachfläche angeklebt. Ein Klebematerial kann insbesondere ein Polymerklebstoff sein, z.B. der Sikaflex^{®}-552 Kleber.

Das Befestigungselement, insbesondere der Teil, der die Klebefläche ausbildet und der nachfolgend auch als Klebeflächenabschnitt bezeichnet wird, kann aus Metall, vorzugsweise Aluminium, weiter vorzugsweise aus einer korrosionsgehemmten Aluminium- oder Edelstahllegierung, ausgebildet sein. Die Klebefläche kann insbesondere eine ungekrümmte Fläche sein. Es ist auch möglich, dass das Befestigungselement Vertiefungen, Durchgangs- oder Sacklochöffnungen im Bereich der Klebefläche aufweist, die zur Aufnahme von Klebematerial dienen. Derartige Vertiefungen, z.B. in Form von Rillen oder Nuten, Durchgangsöffnungen oder Sacklochöffnungen können auch zur Befestigung des Heckträgersystems in einer von der Verklebung verschiedenen Befestigungsart dienen. Sie sind jedoch optional, es können auch Befestigungselement ohne Vertiefungen, Durchgangs- oder Sacklochöffnungen im Bereich der Klebefläche verwendet werden. Das Befestigungselement kann als Befestigungsplatte ausgebildet sein oder eine Befestigungsplatte umfassen, wobei diese Klebefläche aufweisen kann.

Das Befestigungselement kann zusätzlich mindestens ein Befestigungsmittel zur Befestigung des Trägerkörpers, insbesondere eines dachseitigen freien Ende des Trägerkörpers, an dem Befestigungselement aufweisen, insbesondere zur lösbaren Befestigung. Dieses Befestigungsmittel kann ein von dem Trägerkörper und/oder der Dachfläche demontierbares Befestigungsmittel sein. Weist das Befestigungselement beispielsweise an einer Unterseite die Klebefläche aus, so kann das mindestens eine (demontierbare) Befestigungsmittel an einer Oberseite des Befestigungselements angeordnet oder ausgebildet sein.

Es ist möglich, dass ein dachseitiges freies Ende des Trägerkörpers an genau einem Befestigungselement befestigt ist/wird und somit über dieses Befestigungselement an der Dachfläche angeklebt werden kann. Es ist aber auch möglich, dass ein dachseitiges freies Ende des Trägerkörpers an mehreren, insbesondere zwei, Befestigungselementen befestigt ist/wird und somit über diese Befestigungselemente an der Dachfläche angeklebt werden kann.

Durch die Ausbildung des Heckträgersystems mit mindestens einer, vorzugsweise jedoch mehreren, Klebelfäche(n) wird in vorteilhafter Weise eine zerstörungsfreie Montage des Heckträgersystems am Reisemobil ermöglicht, die aber eine zuverlässige Abtragung von Kräften bzw. Momenten über die Dachfläche ermöglicht. Ferner wird eine Montage ohne zusätzliche Bauraumanforderungen und in kostengünstiger Weise ermöglicht.

Auch ermöglicht das vorgeschlagene Heckträgersystem eine entlang der Heckfläche des Reisemobils hohe Anordnung von Lasten, da die aus einer solch hohen Aufhängung resultierenden höheren Drehmomente zuverlässig abgeleitet werden können. Hierdurch wiederum kann eine Fahrzeuglänge in vorteilhafter Weise in einem kollisionsrelevanten Abschnitt, z.B. in einer Höhe von 0 bis -1,2 m über einer Fahrbahnoberfläche reduziert werden, da dort keine Lasten angeordnet werden müssen. Bei einer im Vergleich tieferen Lastanordnung, z.B. in dem genannten Bereich von 0 bis 1,2 m über der Fahrbahnoberfläche, verlängert sich die Gesamtlänge des Reisemobils in diesem Bereich. Somit aber erhöht sich auch das Risiko einer Kollision in diesem Bereich.

In einer weiteren Ausführungsform weist das Heckträgersystem mindestens ein Dämpfungselement zur Dämpfung der vom Heckträgersystem auf die Dachfläche übertragenen Kräfte/Momente auf. Es ist z.B. möglich, dass der Trägerkörper, insbesondere das dachseitige freie Ende, über das Dämpfungselement mit dem Klebeflächenabschnitt verbunden ist. So kann das Dämpfungselement insbesondere zwischen dem Klebeflächenabschnitt und einem Trägerbefestigungsmittel zur Befestigung des Trägerkörpers oder eines seiner Bestandteile angeordnet sein, wobei das dachseitige Befestigungselement das Trägerbefestigungsmittel aufweist. Es ist weiter möglich, dass das dachseitige Befestigungselement oder das mindestens eine Trägerbefestigungsmittel das Dämpfungselement aufweist.

Durch das Dämpfungselement ergibt sich in vorteilhafter Weise, dass die in die Dachfläche eingeleiteten Kräfte/Momente reduziert werden, wodurch eine mechanische Belastung der Klebeverbindung reduziert wird. Dies erhöht in vorteilhafter Weise eine Lebensdauer und Betriebssicherheit des Heckträgersystems, insbesondere im montierten Zustand.

Das mindestens eine Dämpfungselement kann ein elastisches Element sein. Hierdurch kann auch eine Relativbewegung zwischen Karosserie (und somit der Dachfläche) und dem Fahrgestell zumindest teilweise durch eine Verformung des Dämpfungselements ausgeglichen werden. Auch dies erhöht in vorteilhafter Weise eine Lebensdauer und Betriebssicherheit des Heckträgersystems, insbesondere im montierten Zustand.

In einer weiteren Ausführungsform weist das mindestens eine dachseitige Befestigungselement ein erstes Teilelement, welches die Klebefläche aufweist, und mindestens ein weiteres Teilelement auf, welches lösbar mit dem ersten Teilelement mechanisch verbunden ist. Das erste Teilelement kann den Klebeflächenabschnitt aufweisen und beispielsweise als die vorhergehend erläuterte Befestigungsplatte ausgebildet sein.

Das weitere Teilelement kann das vorhergehend erläuterte Trägerbefestigungsmittel zur Befestigung am Trägerkörper aufweisen. So kann das weitere Teilelement als Befestigungsschelle ausgebildet sein oder einen Abschnitt aufweisen, der als Befestigungsschelle ausgebildet ist. Eine solche Befestigungsschelle kann zur Befestigung eines Abschnitts des Trägerkörpers, insbesondere eines Abschnitt eines dachseitigen freien Lastanordnung, z.B. in dem genannten Bereich von 0 bis 1,2 m über der Fahrbahnoberfläche, verlängert sich die Gesamtlänge des Reisemobils in diesem Bereich. Somit aber erhöht sich auch das Risiko einer Kollision in diesem Bereich.

In einer weiteren Ausführungsform weist das Heckträgersystem mindestens ein Dämpfungselement zur Dämpfung der vom Heckträgersystem auf die Dachfläche übertragenen Kräfte/Momente auf. Es ist z.B. möglich, dass der Trägerkörper, insbesondere das dachseitige freie Ende, über das Dämpfungselement mit dem Klebeflächenabschnitt verbunden ist. So kann das Dämpfungselement insbesondere zwischen dem Klebeflächenabschnitt und einem Trägerbefestigungsmittel zur Befestigung des Trägerkörpers oder eines seiner Bestandteile angeordnet sein, wobei das dachseitige Befestigungselement das Trägerbefestigungsmittel aufweist. Es ist weiter möglich, dass das dachseitige Befestigungselement oder das mindestens eine Trägerbefestigungsmittel das Dämpfungselement aufweist.

Durch das Dämpfungselement ergibt sich in vorteilhafter Weise, dass die in die Dachfläche eingeleiteten Kräfte/Momente reduziert werden, wodurch eine mechanische Belastung der Klebeverbindung reduziert wird. Dies erhöht in vorteilhafter Weise eine Lebensdauer und Betriebssicherheit des Heckträgersystems, insbesondere im montierten Zustand.

Das mindestens eine Dämpfungselement kann ein elastisches Element sein. Hierdurch kann auch eine Relativbewegung zwischen Karosserie (und somit der Dachfläche) und dem Fahrgestell zumindest teilweise durch eine Verformung des Dämpfungselements ausgeglichen werden. Auch dies erhöht in vorteilhafter Weise eine Lebensdauer und Betriebssicherheit des Heckträgersystems, insbesondere im montierten Zustand.

Erfindungsgemäß weist das mindestens eine dachseitige Befestigungselement ein erstes Teilelement, welches die Klebefläche aufweist, und mindestens ein weiteres Teilelement auf, welches lösbar mit dem ersten Teilelement mechanisch verbunden ist. Das erste Teilelement kann den Klebeflächenabschnitt aufweisen und beispielsweise als die vorhergehend erläuterte Befestigungsplatte ausgebildet sein.

Das weitere Teilelement kann das vorhergehend erläuterte Trägerbefestigungsmittel zur Befestigung am Trägerkörper aufweisen. So kann das weitere Teilelement als Befestigungsschelle ausgebildet sein oder einen Abschnitt aufweisen, der als Befestigungsschelle ausgebildet ist. Eine solche Befestigungsschelle kann zur Befestigung eines Abschnitts des Trägerkörpers, insbesondere eines Abschnitt eines dachseitigen freien Endes, dienen. Auch kann das weitere Teilelement das vorhergehend erläuterte Dämpfungselement aufweisen.

Endes, dienen. Auch kann das weitere Teilelement das vorhergehend erläuterte Dämpfungselement aufweisen.

Zur lösbaren Befestigung der Teilelemente aneinander kann mindestens eines der Teilelemente entsprechende (Teilelement-)Befestigungsmittel aufweisen. Hierdurch ergibt sich in vorteilhafter Weise eine einfache Konstruktion und Herstellbarkeit des dachseitigen Befestigungselements.

In einer weiteren Ausführungsform sind die Teilelemente derart konfiguriert, dass diese in mindestens zwei voneinander verschiedenen Relativpositionen miteinander verbunden werden können. Mit anderen Worten kann das weitere Teilelement in verschiedenen Positionen relativ zum ersten Teilelement an diesem lösbar befestigt werden. Hierdurch wird in vorteilhafter Weise eine einfache Montage des Heckträgersystems an einer Vielzahl von Reisemobilen ermöglicht.

Z.B. kann eines der Teilelemente eine Vielzahl von Befestigungsmitteln zur Befestigung des verbleibenden Teilelements aufweisen, die die erläuterte Befestigung in verschiedenen Relativpositionen ermöglichen. Ein solches Befestigungsmittel kann z.B. eine Gewindebohrung, ein Rastelement, ein Klemmelement oder ein anderes Element zur Herstellung einer lösbaren mechanischen Verbindung sein.

Insbesondere kann das erste Teilelement eine Aufnahmenut aufweisen, die zur Befestigung des weiteren Teilelements dienen kann. Die Aufnahmenut kann nach oben geöffnet sein, wobei eine Breite der Nut im Bereich der Öffnung kleiner sein kann als eine Breite der Nut im Bereich der Nutbodenfläche. So kann die Aufnahmenut z.B. als T-Nut oder Trapeznut ausgebildet sein.

Eine Befestigung des weiteren Teilelements in der Aufnahmenut kann z.B. über ein Gewindeelement erfolgen, welches in der Aufnahmenut verschieblich angeordnet werden kann. Das weitere Teilelement kann dann an diesem Gewindeelement angeschraubt und hierdurch an das erste Teilelement angeklemmt werden, wobei insbesondere ein die Nut teilweise abdeckender Abschnitt des ersten Teilelements zwischen dem Gewindeelement und dem weiteren Teilelement eingeklemmt wird. Das Gewindeelement kann insbesondere ein Nutstein sein.

Insbesondere kann das erste Teilelement als Zurrschiene ausgebildet sein. Bei einer solchen Zurrschiene kann die Breite der Nut im Bereich der Öffnung entlang der Nut variieren, um Einsetz- und Klemmabschnitte bereitzustellen. So kann in ersten Bereichen der Öffnung eine Breite der Nut größer als in weiteren Bereichen der Öffnung sein, wobei die ersten Bereiche dann Einsetzabschnitte für z.B. ein Gewindeelement und die weiteren Bereiche dann Klemmabschnitte bilden.

In einer weiteren Ausführungsform ist die Klebefläche mindestens 12 cm lang und mindestens 1 cm breit. Vorzugsweise ist die Klebefläche mindestens 50 cm lang. Weiter vorzugsweise ist die Klebefläche weniger als 60 cm lang und/oder weniger als 5 cm breit. Simulationen und Versuche haben gezeigt, dass bereits ab diesen Dimensionen die zuverlässige Ableitung von Kräften/Momenten gewährleistet werden kann.

In einer weiteren Ausführungsform weist das mindestens eine Befestigungselement zwei Klebeflächen auf, wobei das mindestens eine Dämpfungselement in einer gemeinsamen Projektionsfläche, die zumindest eine der Klebefläche umfasst, zumindest teilweise oder aber vollständig zwischen den Klebeflächen angeordnet ist. Jede der Klebeflächen kann wie vorhergehend erläutert ausgebildet sein und insbesondere Vertiefungen, Durchgangs- oder Sacklochöffnungen aufweisen, die zur Aufnahme von Klebematerial dienen

In dieser Ausführungsform kann ein dachseitiges freies Ende -wie vorhergehend erläutert - an mehreren, insbesondere zwei, Teilelementen eines Befestigungselements befestigt sein. Insbesondere kann ein solches Befestigungselement drei Teilelemente umfassen, nämlich zwei erste Teilelemente, die jeweils eine der Klebeflächen aufweisen, und mindestens ein weiteres Teilelement, welches das vorhergehend erläuterte Trägerbefestigungsmittel zur Befestigung am Trägerkörper aufweist. Dieses weitere Teilelement kann wiederum lösbar mit den beiden ersten Teilelementen mechanisch verbunden sein bzw. werden. Die ersten Teilelemente und das weitere Teilelement können hierbei wie vorhergehend erläutert ausgebildet sein. Diese Ausführungsform ermöglicht insbesondere, dass ein zwischen den beiden ersten Teilelementen vorhandene Zwischenraum zur Anordnung des Dämpfungselements und gegebenenfalls zur Anordnung des dritten Teilelements genutzt werden kann, wodurch eine Bauhöhe des Heckträgersystems mit Dämpfungselement über der Dachfläche in vorteilhafter Weise reduziert werden kann.

In einer alternativen Ausführungsform weist das mindestens eine dachseitige Befestigungselement eine, insbesondere genau eine, Klebefläche aufweist, wobei das mindestens eine Dämpfungselement in einer gemeinsamen Projektionsfläche, die die Klebefläche umfasst, zumindest teilweise seitlich versetzt zur Klebefläche angeordnet ist. Das Dämpfungselement kann hierbei in der Projektionsfläche vollständig außerhalb oder zumindest teilweise außerhalb der Klebefläche angeordnet sein. Vorzugsweise ist das Dämpfungselement entlang einer Querrichtung versetzt zur Klebefläche angeordnet, wobei die Querrichtung im montierten Zustand parallel zur Fahrzeugquerachse orientiert sein kann.

Auch mit einer solchen Ausführungsform kann in vorteilhafter Weise eine Bauhöhe des Heckträgersystems mit Dämpfungselement über der Dachfläche reduziert werden.

In einer weiteren Ausführungsform umfasst das Heckträgersystem mindestens einen Tragarm, der beweglich relativ zum Trägerkörper an diesem befestigt ist. Der Tragarm kann insbesondere drehbeweglich am Trägerkörper befestigt sein, weiter insbesondere an einem horizontalen Element des Trägerkörpers, beispielsweise einem vorhergehend bereits erläuterten Verbindungselement. Eine Rotationsachse des Tragarms kann im montierten Zustand insbesondere parallel zur Fahrzeugquerachse orientiert sein oder es kann die Rotationsachse nicht mehr als einen vorbestimmten Winkelbetrag von beispielsweise 15° von dieser Fahrzeugquerachse abweichen.

Der Tragarm kann als Hebehilfe und als, insbesondere temporäre, Halterung für Lasten, z.B. für Gepäckstücke oder andere Lasten wie z.B. ein Fahrrad oder Motorrad, dienen. Im montierten Zustand des Heckträgersystems kann der Tragarm in einem ausgeklappten Zustand beispielsweise von einer Heckseite des Reisemobils abstehen. In diesem Zustand ist der Tragarm insbesondere in Bezug auf die Vertikalstreben abgewinkelt, insbesondere können Tragarm und Vertikalstrebe einen Winkel größer als 45°, vorzugweise größer als 80°, einschließen. In dieser ausgeklappten Stellung kann eine auf z.B. der Fahrbahn stehende Last an dem Tragarm befestigt werden, insbesondere an einem freien Ende des Tragarms. Dann kann dieser mit der daran befestigten Last in eine eingeklappte Stellung bewegt werden, wobei die Last von der Fahrbahn abgehoben wird.

Im montierten Zustand des Heckträgersystems kann der Tragarm in einem eingeklappten Zustand parallel zur Fahrzeughochachse orientiert sein oder es kann der Tragarm nicht mehr als einen vorbestimmten Winkelbetrag von beispielsweise 15° von dieser Fahrzeugquerachse abweichen.

Es ist möglich, dass das Heckträgersystem mindestens ein Mittel zur Arretierung des Tragarms im eingeklappten Zustand aufweist. Auch kann das Heckträgersystem mindestens ein Mittel zur Arretierung des Tragarms im ausgeklappten Zustand aufweisen.

Der Tragarm kann aus Kunststoff, beispielsweise einem glas- oder carbonfaserverstärkten Kunststoff, aus einem Kohlefaserwerkstoff, aus Metall oder aus einer Kombination dieser oder weiterer Werkstoffe ausgebildet sein. Der Tragarm kann insbesondere als Profilelement, insbesondere als Hohlprofilelement, z.B. als Rohr, ausgebildet sein.

Hierdurch wird ein Vorgang zur Beladung des Heckträgersystems mit insbesondere schweren Lasten vereinfacht, da diese mit Hilfe eines Tragarms auch dann am Heckträgersystem angeordnet oder befestigt werden können, wenn die Last auf einer Bodenfläche, z.B. also der Fahrbahn, steht.

In einer weiteren Ausführungsform ist der Tragarm lösbar mit Trägerkörper mechanisch verbunden ist. Insbesondere kann der Tragarm vom Trägerkörper demontiert werden. Dies ermöglicht in vorteilhafter Weise eine einfache Montage und Demontage eines Heckträgersystems mit der Option zur Beladung mit schweren Lasten.

Das Heckträgersystem kann insbesondere eine Aufnahmeeinrichtung zur Befestigung des Tragarms aufweisen, wobei die Aufnahmeeinrichtung eine Lagereinrichtung für die erläuterte drehbare Lagerung umfassen kann. Die Aufnahmeeinrichtung kann z.B. einen Aufnahmezapfen aufweisen, an dem der Tragarm oder ein Zapfenadapter befestigt, insbesondere aufgesteckt, werden kann. Wird ein Zapfenadapter an dem Aufnahmezapfen befestigt, so kann der Tragarm dann an dem Zapfenadapter befestigt werden, z.B. ebenfalls durch Aufstecken. Der Zapfenadapter kann Bestandteil des Heckträgersystems sein.

Insbesondere kann der Tragarm als Hohlkörper ausgebildet sein oder mindestens einen Hohlkörperabschnitt aufweisen, wobei das Innenvolumen des Hohlkörpers zur Aufnahme des Zapfens oder des Adapters dient.

Der Adapter ermöglicht die Befestigung verschiedener Tragarme an der Aufnahmeeinrichtung, insbesondere von Tragarmen mit verschieden großen Innendurchmessern.

Die Aufnahmeeinrichtung kann ferner ein Aufnahmevolumen zur Aufnahme zumindest eines Abschnitts des Tragarms aufweisen. Das Aufnahmevolumen kann beispielsweise ein Volumen zwischen dem Zapfen bzw. dem Zapfenadapter und einer Aufnahmehülse sein. Somit kann die Aufnahmeeinrichtung eine Aufnahmehülse aufweisen. In einem Innenvolumen dieser Aufnahmehülse kann beispielsweise der Zapfen oder der Zapfenadapter angeordnet sein, wobei das Aufnahmevolumen dann Teil des Innenvolumens sein kann.

Der Tragarm kann insbesondere über eine Klemmverbindung an dem Zapfen oder dem Zapfenadapter befestigt werden. Hierzu kann beispielsweise ein Klemmring über die Aufnahmehülse geschoben werden und somit ein in dem Aufnahmevolumen angeordneten Tragarmabschnitt mit der Aufnahmeeinrichtung verklemmen. Auch vorstellbar ist, dass ein anschraubbarer Konusring auf die Aufnahmehülse aufgeschraubt wird, die hierfür einen Gewindeabschnitt aufweisen oder ausbilden kann. Auch hierzu alternative Befestigungsarten sind vorstellbar.

In einer weiteren Ausführungsform umfasst das Heckträgersystem mindestens ein Element eines Seilzugsystems zur Betätigung des Tragarms. Das Seilzugsystem kann insbesondere ein Flaschenzugsystem sein und die zur Bewegung einer Last aufzubringende Kraft im Vergleich zu einer Betätigung ohne Seilzugsystem verringern.

Das Seilzugsystem kann als Elemente insbesondere mindestens ein Seil und mindestens eine Rolle umfassen. Auch kann das Seilzugsystem mindestens ein Seilführungselement und/oder ein Seilbefestigungselement und/oder ein Seilbremselement umfassen. Über das Seilzugsystem kann eine Gewichtskraft der Last über das Heckträgersystem abgeleitet werden. Hierzu kann das Heckträgersystem Seilführungselemente umfassen, die eine Lasteinleitung in das Heckträgersystem ermöglichen.

Durch eine Betätigung des Seilzugsystems kann ein Nutzer den Tragarm in die eingeklappte Stellung bewegen, insbesondere im montierten Zustand des Heckträgersystems. Auch kann der Nutzer den Tragarm durch eine Betätigung des Seilzugsystems in die ausgeklappte Stellung bewegen. Das Seilzugsystem ist hierbei derart konfiguriert, dass sich eine Betätigungskraft zum Bewegen in die eingeklappte Stellung im Vergleich zu einer Betätigungskraft ohne Seilzugsystem verringert, insbesondere wenn eine Last am Tragarm befestigt ist. Gleiches gilt auch für eine Bewegung in die ausgeklappte Stellung.

An dem Tragarm kann mindestens eine Befestigungsschnittstelle zur Befestigung einer Last angeordnet oder ausgebildet sein. Über diese Befestigungsschnittstelle kann die Last direkt oder indirekt an dem Tragarm befestigt werden. Rein exemplarisch kann die Befestigungsschnittstelle eine Öse umfassen oder als Öse ausgebildet sein. Mit einem Haken, der z.B. über ein weiteren Seil oder ein anderes Verbindungsmittel mit der Last verbunden ist, kann dann die Last durch Einhängen mit dem Tragarm verbunden werden. Die Befestigungsschnittstelle kann an einem freien Ende des Tragarms angeordnet sein.

Ein Element des Seilzugsystems, insbesondere mindestens ein Seilbefestigungselement, z.B. in Form einer Öse, kann hierbei am Tragarm befestigt sein, insbesondere an dem freien Ende des Tragarms. Bevorzugt sind die Befestigungsschnittstelle und das mindestens eine Seilbefestigungselement entlang der Längsachse des Tragarms im gleichen Abschnitt des Tragarms angeordnet, insbesondere an Seiten des Tragarms, die einander entlang einer zur Längsachse senkrechten Richtung gegenüberliegen.

Weiter vorzugsweise können zwei Seilbefestigungselemente an dem Tragarm befestigt sein, die zur Kraftableitung in verschiedene Richtungen dienen. So können an dem Tragarm z.B. zwei Seile befestigt werden. Hierdurch kann insbesondere ein Schwenken des Tragarms entlang der Fahrzeugquerachse im montierten Zustand des Heckträgersystems vermieden werden.

Es ist jedoch auch vorstellbar, dass an dem Tragarm nur ein Seilbefestigungselement angeordnet ist. An diesem kann dann z.B. ein Adapterelement zur Befestigung von zwei Seilen befestigt werden. Das Heckträgersystem kann dieses Adapterelement umfassen.

Hierdurch wird ein Vorgang zur Beladung des Heckträgersystems mit insbesondere schweren Lasten weiter vereinfacht, da die notwendigen Kräfte zur Beladung und gegebenenfalls aber auch zur Entladung reduziert werden können.

Weiter vorgeschlagen wird ein Verfahren zur Montage eines Heckträgersystems gemäß einer der in dieser Offenbarung beschriebenen Ausführungsformen an einem Reisemobil, umfassend:
- Befestigen mindestens eines gestellseitigen Befestigungselements an einem Fahrzeuggestell des Reisemobils,
- Befestigen mindestens eines dachseitigen Befestigungselements an einer Dachfläche des Reisemobils.

Erfindungsgemäß wird das mindestens eine dachseitige Befestigungselement mit der mindestens einen Klebefläche an die Dachfläche geklebt.

Hierdurch ergibt sich in vorteilhafter Weise eine einfache, wartungs- und zerstörungsfreie Montage des Heckträgersystems am Reisemobil, wobei gleichzeitig eine zuverlässige Abtragung von Lasten bzw. Momente über die Dachfläche ermöglicht wird. Ferner wird eine Montage ohne zusätzliche Bauraumanforderungen und in kostengünstiger Weise ermöglicht.

Ferner beschrieben wird ein Reisemobil, wobei an dem Reisemobil ein Heckträgersystem gemäß einer der in dieser Offenbarung beschriebenen Ausführungsformen befestigt ist.

Insbesondere kann das mindestens eine gestellseitige Befestigungselement an dem Fahrgestell des Reisemobils, insbesondere an einem Längsträger, einem Querträger oder an einer Anhängerkupplung, die mit dem Fahrgestell verbunden ist, befestigt sein. Das mindestens eine dachseitige Befestigungselement kann an eine Dachfläche des Reisemobils angeklebt sein.

Die Erfindung wird anhand von Ausführungsbeispielen näher erläutert. Die Figuren zeigen:
- Fig. 1: eine perspektivische Ansicht eines erfindungsgemäßen Heckträgersystems,
- Fig. 2: eine perspektivische Ansicht eines dachseitigen Befestigungselements,
- Fig. 3: eine weitere perspektivische Ansicht eines dachseitigen Befestigungselements,
- Fig. 4: eine Vorderansicht eines dachseitigen Befestigungselements,
- Fig. 5: eine perspektivische Ansicht eines Tragarms und
- Fig. 6: eine perspektivische Ansicht einer Aufnahmeeinrichtung für einen Tragarm.

Nachfolgend bezeichnen gleiche Bezugszeichen Elemente mit gleichen oder ähnlichen technischen Merkmalen.

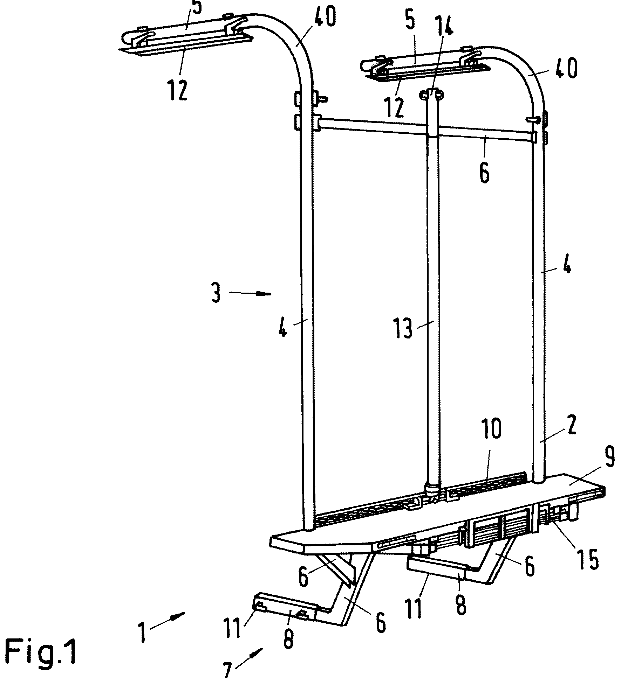

Fig. 1 zeigt eine perspektivische Ansicht eines erfindungsgemäßen Heckträgersystems 1. Das Heckträgersystem 1 umfasst einen Trägerkörper 2. Dieser Trägerkörper 2 umfasst einen Anbauabschnitt 3 mit mehreren als Profilelemente ausgebildete Streben, insbesondere zwei Vertikalstreben 4, zwei Längsstreben 5 und eine Horizontalstrebe 6, die die beiden Vertikalstreben 4 verbindet. Die Horizontalstrebe 6 ist jedoch optional. Weiter umfasst der Trägerkörper 2 einen Basisabschnitt 7, der im dargestellten Ausführungsbeispiel zwei Längsstreben 8 und Diagonalstreben 6 umfasst. Die dargestellten Diagnalstreben 6 können jedoch auch als Vertikalstreben des Basisabschnitts ausgebildet werden. Der Basisabschnitt kann ein Trägerplattenaufnahmegestell bilden.

Eine Trägerplatte 9 ist an dem Basisabschnitt 7 befestigt, insbesondere sind an einer Unterseite der Trägerplatte 9 Enden der Diagonalstreben 6 befestigt. Alternativ zu der Trägerplatte 9 können jedoch auch davon verschiedene Elemente, z.B. Aufnahmeschuhe für Räder eines Motor- oder Fahrrads, befestigt werden.

An dem Basisabschnitt 7wiederum sind die Vertikalstreben 4 befestigt. An einem ersten Ende jeder Vertikalstrebe 4 ist eine Längsstrebe 5 befestigt bzw. geht die Vertikalstrebe 4 in einem gekrümmten Verbindungabschnitt 40 in eine Längsstrebe 5 über. An einem zweiten Ende jeder Vertikalstrebe 4 ist diese an dem Basisabschnitt 7 befestigt, insbesondere an den Diagonalstreben 6 oder einer nicht dargestellten Horizontalstrebe des Basisabschnitts 7, die z.B. die Diagonalstreben 6 miteinander verbinden kann.

Somit werden die Vertikalstreben 4 durch den Basisabschnitt 7 verbunden. Weiter dargestellt ist ein Rückwandabschnitt 10 der Trägerplatte 9, die von der Oberseite der Trägerplatte 9 absteht. Die Trägerplatte 9 kann ein Bestandteil eines Trägerplattenaufnahmegestells sein oder mit diesem Gestell mechanisch verbunden sein.

Ein freies Ende der Längsstreben 5 des Anbauabschnitts 3 bildet jeweils ein dachseitiges Ende des Trägerkörpers 2.

Ein freies Ende der Längsstreben 8 des Basisabschnitts 7 bildet ein gestellseitiges Ende des Trägerkörpers 2. Diese freien Enden bilden gleichzeitig gestellseitige Befestigungselemente zur Befestigung des Heckträgersystem 1 an einem Fahrzeuggestell (nicht dargestellt) des Reisemobils. In Fig. 1 dargestellt sind Befestigungsschuhe 11, die am Fahrgestell befestigt sind und die ein Aufnahmevolumen zur Aufnahme der gestellseitigen Enden des Trägerkörpers 2 aufweisen. In diese Aufnahmevolumen können die gestellseitigen Enden eingebracht werden. Dann können diese gestellseitigen Enden mit dem Befestigungsschuh 11 verbunden werden, beispielsweise über eine Schraubverbindung.

Das Heckträgersystem 1 weist auch zwei dachseitige Befestigungselemente 12 auf.

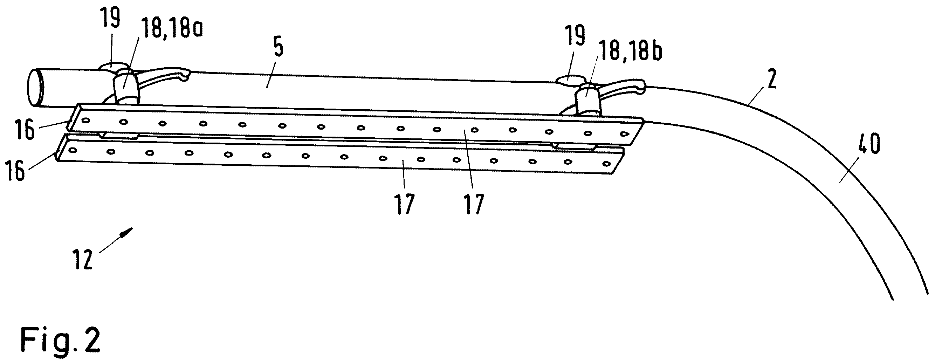

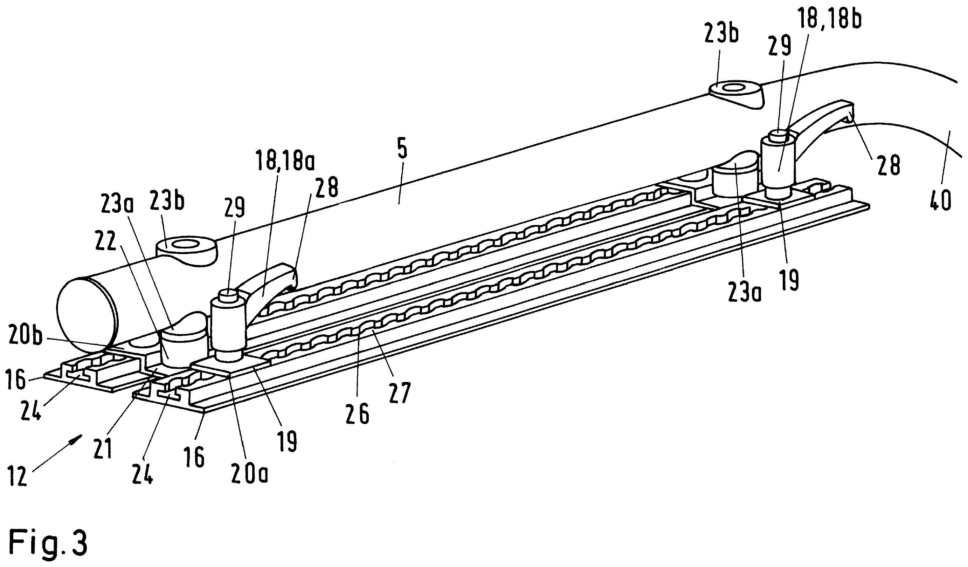

Diese dachseitigen Befestigungselemente 12 dienen zur Befestigung, nämlich zum Ankleben, des Trägerkörpers 2 an einer nicht dargestellten Dachfläche des Reisemobils. Die dachseitigen Befestigungselemente 12 werden in Bezug auf Fig. 2 und Fig. 3 näher erläutert.

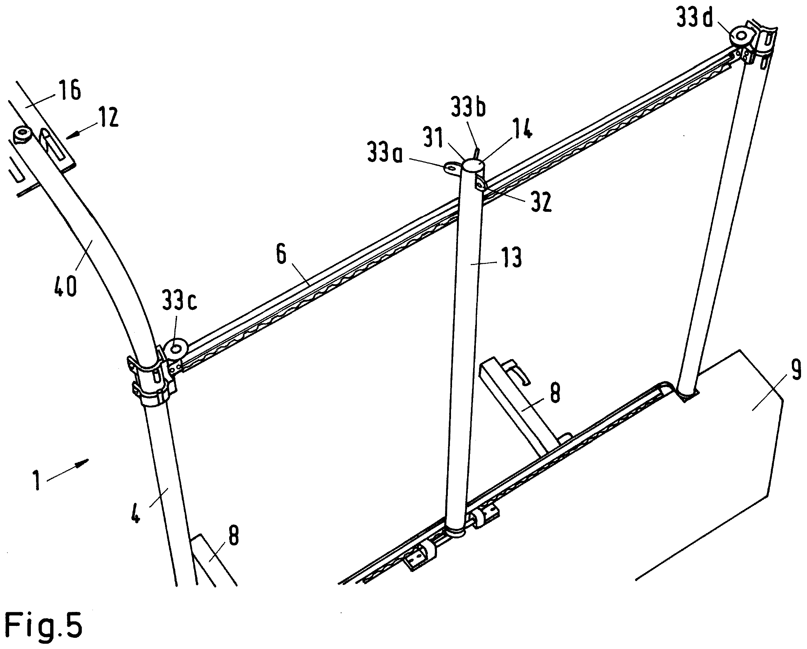

Weiter dargestellt ist ein Tragarm 13 des Heckträgersystems 1. Dieser Tragarm 13 ist drehbar am Trägerkörper 2, insbesondere am Basisabschnitt 7, gelagert und insbesondere mit einem Ende an dem Basisabschnitt 7 angeordnet. An einem freien Ende 14 des Tragarms 13 kann eine Last, z.B. ein Motor- oder Fahrrad, befestigt werden, insbesondere über ein Seil, welches über Seilzugösen 33a, 33b (siehe Fig. 5) am freien Ende 14 geführt wird. Die Last kann hierbei in eine Öse 32 eingehängt werden, die ebenfalls am freien Ende angeordnet ist.

Weiter dargestellt ist, dass an dem Tragkörper 2, insbesondere an dem Trägerplattenaufnahmegestell bzw. dem Basisabschnitt 7, Rücklichter angeordnet sind. Nicht in den Figuren dargestellt ist eine elektrische Schnittstelle des Heckträgersystems 1 über die das Heckträgersystem 1 elektrisch mit einem elektrischen System des Reisemobils verbunden werden kann, z.B. um die Rücklichter anzusteuern. Weiter dargestellt ist, dass das Heckträgersystem 1 eine Aufnahmevorrichtung 15 aufweist oder ausbildet. Bei der in Fig. 1 dargestellten Ausführungsform ist diese Aufnahmevorrichtung unterhalb der Trägerplatte 9, also zwischen den Horizontalstreben 6, angeordnet. Diese Aufnahmevorrichtung15 kann zur Aufnahme von Lasten bzw. zu transportierenden Gegenständen, z.B. dem Anbau von weiterem Zubehör oder Beladungshilfen, dienen.

Lasten können aber zum Transport auch auf der Oberseite der Trägerplatte 9 angeordnet und dort gegebenenfalls fixiert werden. Wie nachfolgend noch näher erläutert kann eine Last z.B. mit dem Tragarm 13 von einer Bodenfläche auf die Trägerplatte 9 gehoben werden.

Es ist vorstellbar, dass insbesondere an den Vertikalstreben 4 weitere Anbauteile zum Lasttransport befestigt werden.

Fig. 2 zeigt eine perspektivische Ansicht eines dachseitigen Befestigungselements 12. Jedes Befestigungselement 12 umfasst jeweils zwei als Zurrschienen ausgebildete erste Teilelemente 16. Alternativ ist es natürlich vorstellbar, dass ein dachseitiges Befestigungselement nur eine Zurrschiene 12 umfasst. Diese Zurrschienen weisen einen gelochten Schienenboden auf. Eine Unterseite bzw. eine dachseitige Fläche des Schienenbodens einer Zurrschiene bildet eine Klebefläche 17. Auf dieser Klebefläche 17 kann ein Klebemittel aufgetragen werden, um die Zurrschienen und somit das Befestigungselement 12 mit einer Dachfläche des Reisemobils zu verkleben.

Weiter dargestellt sind Feststellschrauben 18, die zur Befestigung eines weiteren Teilelements 19 (siehe Fig. 3) an der Zurrschiene dienen. Diese Feststellschrauben können werkzeuglos arretierbare Feststellschrauben sein. In Fig. 2 ist dargestellt, dass die Längsstreben 5 bzw. die dachseitigen freien Enden des Trägerkörpers 2 über jeweils zwei Feststellschrauben 18 und Teilelemente 19 an einer Zurrschiene befestigt ist. Hierbei erfolgt die Befestigung über eine erste Feststellschraube 18a und ein erstes Teilelement 19 an einem freien Ende bzw. einem Abschnitt der Längsstrebe 5, der das freie Ende umfasst, und mit einer weiteren Feststellschraube 18b und ein weiteres Teilelement 19 an einem diesem ersten Ende gegenüberliegenden Ende der Längsstrebe 5.

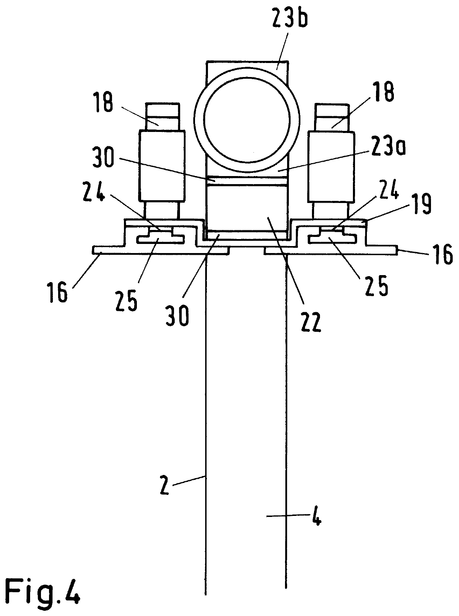

Fig. 3 zeigt eine weitere perspektivische Ansicht eines dachseitigen Befestigungselements 12 mit den zwei als Zurrschienen ausgebildeten Teilelementen 16. Die Zurrschienen weisen jeweils eine T-Nut 24 auf, die sich entlang der Längsachse der Zurrschienen erstreckt. Die T-Nut 24 dient zur Aufnahme eines in Längsrichtung verschieblichen Gewindeelements 25 (siehe Fig. 4). Ebenfalls dargestellt ist, dass eine Breite der T-Nut 24 einer Nutöffnung entlang der T-Nut 24 variieren, um Einsetz- und Klemmabschnitte bereitzustellen. So kann in ersten Bereichen 26 der Öffnung eine Breite der Nut größer als in weiteren Bereichen 27 der Öffnung sein, wobei die ersten Bereiche 26 dann Einsetzabschnitte für z.B. das Gewindeelement 25 und die weiteren Bereiche 27 dann Klemmabschnitte bilden. Der Übersichtlichkeit halber ist nur jeweils einer der Bereiche 26, 27 mit einem Bezugszeichen versehen. Der die T-Nut 24 bildenden Abschnitt (Nutabschnitt) der Zurrschiene steht hierbei vom Bodenabschnitt der Zurrschiene ab. Eine Breite des Nutabschnitts ist kleiner als eine Breite des Bodenabschnitts. Eine Länge des Nutabschnitts entspricht aber der Länge des Bodenabschnitts.

Ebenfalls dargestellt sind weitere Teilelemente 19 des Befestigungselements 12. Diese sind als Winkelprofile ausgebildet und weisen jeweils einen plattenförmigen ersten Befestigungsabschnitt 20a zum Befestigen an einer ersten Zurrschiene auf und können, im dargestellten Ausführungsbeispiel mit zwei als Zurrschienen ausgebildeten Teilelementen 16, auch einen weiteren plattenförmigen Befestigungsabschnitt 20b zur Befestigung an der weiteren Zurrschiene aufweisen. Diese Befestigungsabschnitte 20a, 20b sind in einer gemeinsamen Ebene angeordnet. Weiter weisen die Winkelprofile einen Aufnahmeabschnitt 21 auf, der zur Aufnahme und Befestigung eines Dämpfungselements 22 dient. Dieser Aufnahmeabschnitt 21 ist als Vertiefung ausgebildet. Insbesondere ist eine Bodenfläche des Aufnahmeabschnitts 21 parallel zur gemeinsamen Ebene aber mit einem vorbestimmten Abstand von dieser angeordnet. Auf dieser Bodenfläche ist das Dämpfungselement 22 angeordnet und an dem Winkelprofil befestigt, z.B. mit diesem verschraubt.

Die Befestigungsabschnitte 20a, 20b weisen jeweils eine Durchgangsöffnung für eine Feststellschraube 18 auf, die sich durch die Durchgangsöffnung und durch die Nutöffnung der T-Nut 24 in ein Gewinde des in Fig. 4 dargestellten Gewindeelements 25 erstreckt, welches in der T-Nut 24 angeordnet ist. Die Befestigungsabschnitte 20a, 20b liegen auf Abschnitten der Zurrschiene auf, die die Nut teilweise abdecken.

Wird die Feststellschraube 18 in das Gewinde eingeschraubt, z.B. durch Betätigung eines Hebelabschnitts 28 der Feststellschraube 18, der an einem Schraubenkopf 29 angeordnet ist, so wird das Winkelprofil an die Zurrschiene angeklemmt, insbesondere da die Abschnitte der Zurrschiene zwischen Gewindeelement 25 und Befestigungsabschnitt 20a, 20b eingeklemmt werden.

In Fig. 3 ist dargestellt, dass eine Längsstrebe 5 ein Profilelement mit einem kreisförmigen Querschnitt sein kann. Das Befestigungselement 12 umfasst Schellenelemente 23a, 23b, die zum Einspannen der Längsstrebe 5 und zum Befestigen an dem Dämpfungselement 22 bzw. dem Winkelprofil dienen. Sie weisen jeweils eine ungekrümmte erste Oberfläche und eine gekrümmte zweite Oberfläche auf, wobei das Schellenelement 23a, 23b mit der gekrümmten zweiten Oberfläche an der Längsstrebe 5 anliegt.

Dargestellt ist, dass erste, obere Schellenelemente 23a eine Durchgangsöffnung für ein Befestigungs- bzw. Verbindungselement wie z.B. eine Schraube aufweist. Durch diese Durchgangsöffnung und eine nicht dargestellte Durchgangsöffnung in der Längsstrebe 5 kann sich ein solches Element in eine Arretier-Aufnahme, z.B. ein Gewinde, eines weiteren Schellenelements 23b erstrecken. Durch ein Arretieren, insbesondere ein Verschrauben, kann dann die Längsstrebe 5 zwischen die Schellenelemente 23a, 23b eingespannt werden.

Das weitere, untere Schellenelement 23b kann an dem Dämpfungselement 22 befestigt sein, z.B. mit diesem verklebt oder verschraubt sein. Allerdings sind auch andere Arten der Befestigung des Dämpfungselements 22 an der Längsstrebe 5 vorstellbar. So kann das Dämpfungselement 22 z.B. auch über ein die Elemente 22, 23b, 23a verbindendes Verbindungselement an der Längsstrebe 5 befestigt sein, insbesondere mit dieser verklemmt sein. Weiter insbesondere kann das Dämpfungselement 22 auch andere oder weitere Befestigungsmittel umfassen, z.B. mindestens einen Innengewindeabschnitt und/oder mindestens einen Außengewindeabschnitt. So kann z.B. das Dämpfungselement 22 über einen Außengewindeabschnitt mit mindestens einem der Schellenelemente 23a, 23b verbunden sein, das einen Innengewinde zur Aufnahme des Außengewindeabschnitts aufweisen kann. Weiter kann z.B. das Dämpfungselement 22 über einen Innengewindeabschnitt mit dem Aufnahmeabschnitt 21 verbunden sein, z.B. über eine Schraube.

Das Dämpfungselement 22 kann auch als Silent-Block bezeichnet, werden.

Die Längsstrebe 5 und somit ein dachseitiges freies Ende des Trägerkörpers 2 kann somit über die Dämpfungselemente 22, die an den weiteren Teilelementen 19 befestigt sind, an den Zurrschienen befestigt werden.

Aus Fig. 2 ergibt sich auch, dass das Dämpfungselement 22 sowie die Schellenelemente 23a, 23b und der Längsträger 5 in einer gemeinsamen Projektionsfläche, in der die Klebeflächen 17 angeordnet sind, in der Variante mit zwei Teilelementen 16 zwischen den Klebeflächen 17 angeordnet ist. Mit anderen Worten kann das Dämpfungselement 22 zumindest teilweise in einem Zwischenraum zwischen den beabstandet voneinander angeordneten Zurrschienen angeordnet sein.

In der Ausführung des Befestigungselementes 12 mit nur einem Teilelement 16, z.B. nur einer Zurrschiene, können das Dämpfungselement 22, die Schellenelemente 23a, 23b und der Längsträger 5, in der Projektionsfläche in Querrichtung versetzt zur Längsachse des Teilelements 16 angeordnet sein.

Fig. 4 zeigt eine Vorderansicht eines dachseitigen Befestigungselements 12. In Fig. 4 ist insbesondere das in der T-Nut 24 der jeweiligen Zurrschienen angeordnete Gewindeelement 25 dargestellt. Dieses Gewindeelement 25 kann auch als Nutstein bezeichnet werden. Weiter erkennbar ist, dass das Trägerbefestigungselement 12 zwei Abstandshalteringe 30 umfasst, wobei ein Abstandshaltering 30 zwischen der Bodenfläche des Aufnahmeabschnitts 21 und dem Dämpfungselement 22 und ein weiterer Abstandshaltering 30 zwischen dem Dämpfungselement 22 und dem weiteren Schellenelement 23b angeordnet ist.

Diese scheibenförmigen Abstandshalteringe 30 bilden Auflageelement für das Dämpfungselement 22 und weisen einen Durchmesser auf, der größer als der oder gleich dem Durchmesser des Dämpfungselements 22 sein kann, um ein Durchscheuern oder Einkerben zu vermeiden. Es ist auch vorstellbar, dass die Abstandshalteringe 30 fest mit dem Dämpfungselement 22 verbunden oder von diesem ausgebildet werden.

Fig. 5 zeigt eine perspektivische Ansicht eines Tragarms 13 in einem eingeklappten Zustand. An einem freien Ende 14 des Tragarms 13 ist eine Kopplungselement 31 angeordnet, das an dem Tragarm 13 befestigt ist. Dieses Kopplungselement 31 weist mindestens eine Befestigungsöse 32 und Seilzugösen 33a, 33b auf. Die Befestigungsöse 32 ist hierbei auf einer Seite des Kopplungselements 31 angeordnet, die der Seite des Kopplungselements 31 abgewandt ist, an der die Seilzugösen 33a, 33b angeordnet sind. Dargestellt ist, dass das Kopplungselement 31, welches z.B. in Form einer Kappe ausgebildet sein kann, zwei Seilzugösen 33a, 33b umfasst. Es ist jedoch vorstellbar, dass das Kopplungselement 31 nur eine Seilzugöse aufweist.

Die Befestigungsöse 32 dient zur Befestigung einer Last, z.B. eines Fahr- oder Motorrads, über geeignete Befestigungsmittel. Es ist dargestellt, dass diese Befestigungsöse 32 im montieren Zustand des Heckträgersystems 1 von einer Heckseite des Reisemobils absteht.

Die Befestigungsöse 32 und Seilzugösen 33a, 33b dienen zur Befestigung von Rollen oder anderen Elementen eines Seilzugsystems, welches in Fig. 5 nicht dargestellt ist. Das Heckträgersystem 1 umfasst weitere Seilzugösen 33c, 33d, die im dargestellten Ausführungsbeispiel an den Vertikalstreben 4 des Trägerkörpers 2 befestigt sind. Auch diese Ösen 33c, 33d dienen zur Befestigung von Rollen des nicht dargestellten Seilzugsystems oder zur Seilführung. Die Seilzugösen 33c, 33d können auch an den Längsstreben 5, den Verbindungsabschnitten 40 oder den Diagnolstreben 6 (siehe Fig. 1) befestigt sein.

Das Seilzugsystem dient zur Reduktion der zur Bewegung einer an der Befestigungsöse 32a befestigten Last erforderlichen Kraft im Vergleich zu einer Betätigung ohne Seilzugsystem.

Weiterhin können durch die konstruktive Auslegung und funktionelle Bedienung des Seilzugsystems, von der Längsachse abweichende Gierbewegungen in geringem Umfang beeinflusst werden.

Durch eine Betätigung des Seilzugsystems kann ein Nutzer den Tragarm 13 mit einer daran befestigten Last, insbesondere stufenlos, in die dargestellte eingeklappte Stellung bewegen, insbesondere im montierten Zustand des Heckträgersystems. Dann kann die Last auf die Oberfläche der Trägerplatte 9 bzw. auf das Trägerplattenaufnahmegestell, an dem die Trägerplatte 9 montiert sein kann, heruntergelassen werden und darauf zum Transport angeordnet werden.

Zum Entladen kann ein Nutzer durch Betätigung des Seilzugsystems die am Tragarm 13 befestigte Last dann von der Trägerplatte 9 bzw. von dem Trägerplattenaufnahmegestell abheben. Durch eine weitere Betätigung kann der Tragarm 13 dann in eine ausgeklappte Stellung bewegt werden. Im montierten Zustand des Heckträgersystems steht der Tragarm 13 in der ausgeklappten Stellung von der Heckseite des Reisemobils ab. Somit kann die Last auf einer Bodenfläche bzw. Fahrbahnfläche abgesetzt werden bzw. auf ein Höhenniveau bewegt werden, welches entlang der Vertikalrichtung beabstandet vom Höhenniveau der Oberfläche der Trägerplatte 9 bzw. des Trägerplattenaufnahmegestells sein kann.

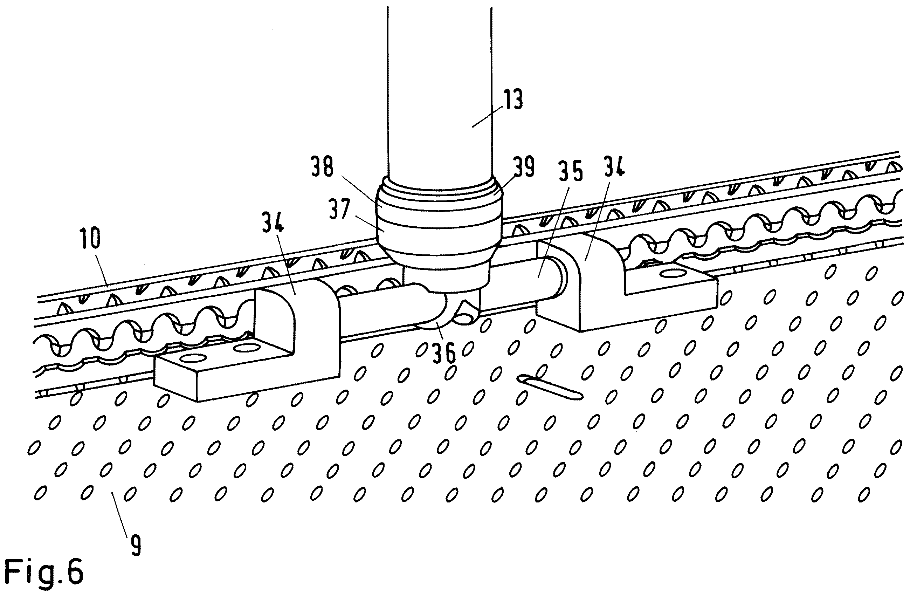

Fig. 6 zeigt eine perspektivische Ansicht einer Aufnahmeeinrichtung für einen Tragarm 13. Dargestellt sind Lagerbuchsen 34 und eine Welle 35, deren Enden drehbar in den Lagerbuchsen 34 gelagert sind. Die Lagerbuchsen 34 sind an der Trägerplatte 9 bzw. dem Trägeraufnahmegestell, insbesondere in einer die Trägerplatte 9 durchdringenden Weise, befestigt. Eine Rotationsachse der Welle 35 ist hierbei im montierten Zustand des Heckträgersystems 1 parallel zu einer Fahrzeugquerachse orientiert. An der Welle 35 ist ein in Fig. 6 nicht ersichtlicher Zapfen befestigt, der in einem zentralen Abschnitt der Welle 35 von dieser absteht. Auf diesen Zapfen aufgesteckt ist ein Zapfenadapter 36, dessen Außendurchmesser dem Innendurchmesser eines hohlzylinderförmigen Abschnitts des Tragarms 13 entspricht oder nicht mehr als ein vorbestimmtes Maß davon abweicht. Der Zapfenadapter 36 sowie eine Aufnahmehülse 37 bilden eine Aufnahmeeinrichtung für den Tragarm 13. Die Aufnahmehülse 37 wird auf den Zapfenadapter 36 aufgesteckt, wobei zwischen einer Außenwand des Zapfenadapters 36 und einer Innenwand der Aufnahmehülse 37 ein Aufnahmevolumen zur Aufnahme des hohlzylinderförmigen Abschnitts des Tragarms 13 ausgebildet ist. Hierbei kann der Zapfenadapter 36 oder die Aufnahmehülse 37 eine Anschlagfläche für eine Stirnseite des hohlzylinderförmigen Abschnitts des Tragarms 13 aufweisen.

Weiter dargestellt ist ein Klemmring 38. Dieser Klemmring 38 kann eine abgeschrägte innere Mantelfläche aufweisen, wobei sich ein Innendurchmesser des Klemmrings von einer oberen Seite hin zu einer unteren Seite vergrößert. Dieser Klemmring 38 kann auf die Aufnahmehülse 37 aufgesteckt werden, die einen abgeschrägten Abschnitt an einer äußeren Mantelfläche aufweisen kann, in dem sich ein Außendurchmesser von oben nach unten vergrößert. Die Durchmesser sind hierbei derart dimensioniert, dass beim Aufstecken des Klemmrings 30 eine Klemmkraft von diesem auf die äußere Mantelfläche der Aufnahmehülse 37 ausgeübt wird, wodurch dann der Tragarm 13 zwischen der Aufnahmehülse 37 und dem Zapfenadapter 36 verklemmt wird. In Fig. 6 ebenfalls dargestellt ist ein Arretierring 39, der zur Arretierung des Klemmrings 38 auf die Aufnahmehülse 37 aufgesteckt wird.

Die Arretierung des Arretierrings 39 kann über eine, der Kontur des Arretierrings 39 angepasste Außenkontur der Aufnahmehülse 37 formschlüssig erfolgen oder durch eine Gewindearretierung über einen arretierringseitigen Innengewindeabschnitt, z.B. an einer Innenseite des Arretierrings 39, und einen hülsenseitigen Außengewindeabschnitt der Aufnahmehülse 37 oder über ein Bajonettverschluss mit entsprechenden Konturen des Arretierrings 39 sowie der Aufnahmehülse 37.

## Patentansprüche

1. Heckträgersystem für Reisemobile, umfassend:
- einen Trägerkörper (2),
- mindestens ein gestellseitiges Befestigungselement zur Befestigung des Heckträgersystems (1) an einem Fahrzeuggestell des Reisemobils,
- mindestens ein dachseitiges Befestigungselement (12) zur Befestigung des Heckträgersystems (1) an einer Dachfläche des Reisemobils,
- **dadurch gekennzeichnet, dass**
das mindestens eine dachseitige Befestigungselement (12) mindestens eine Klebefläche (17) zur Aufbringung eines Klebmaterials aufweist,
**dadurch gekennzeichnet, dass**
das mindestens eine dachseitige Befestigungselement (12) ein erstes Teilelement (16), welches die Klebefläche (17) aufweist, und mindestens ein weiteres Teilelement (19) aufweist, welches lösbar mit dem ersten Teilelement (16) mechanisch verbunden ist.

2. Heckträgersystem nach Anspruch 1, **dadurch gekennzeichnet, dass** das Heckträgersystem (1) mindestens ein Dämpfungselement (22) zur Dämpfung der vom Heckträgersystem (1) auf die Dachfläche übertragenen Kräfte/Momente aufweist.

3. Heckträgersystem nach einem der vorangegangenen Ansprüche, **dadurch gekennzeichnet, dass** die Teilelemente (16, 19) derart konfiguriert sind, dass diese in mindestens zwei voneinander verschiedenen Relativpositionen miteinander verbunden werden können.

4. Heckträgersystem nach einem der vorangegangenen Ansprüche, **dadurch gekennzeichnet, dass** die Klebefläche (17) mindestens 12 cm lang und mindestens 1 cm breit ist.

5. Heckträgersystem nach einem der Ansprüche 2 bis 4, **dadurch gekennzeichnet, dass** das mindestens eine dachseitige Befestigungselement (12) zwei Klebeflächen (17) aufweist, wobei das mindestens eine Dämpfungselement (22) in einer gemeinsamen Projektionsfläche, die zumindest eine der Klebeflächen (17) umfasst, zumindest teilweise zwischen den Klebeflächen (17) angeordnet ist.

6. Heckträgersystem nach einem der Ansprüche 2 bis 4, **dadurch gekennzeichnet, dass** das mindestens eine dachseitige Befestigungselement (12) eine Klebefläche (17) aufweist, wobei das mindestens eine Dämpfungselement (22) in einer gemeinsamen Projektionsfläche, die die Klebefläche (17) umfasst, zumindest teilweise seitlich versetzt zur Klebefläche angeordnet ist.

7. Heckträgersystem nach einem der vorangegangenen Ansprüche, **dadurch gekennzeichnet, dass** das Heckträgersystem (1) mindestens einen Tragarm (13) umfasst, der beweglich relativ zum Trägerkörper (2) an diesem befestigt ist.

8. Heckträgersystem nach Anspruch 7, **dadurch gekennzeichnet, dass** der Tragarm (13) lösbar mit Trägerkörper (2) mechanisch verbunden ist.

9. Heckträgersystem nach Anspruch 7 oder 8, **dadurch gekennzeichnet, dass** das Heckträgersystem (1) mindestens ein Element eines Seilzugsystems zur Betätigung des Tragarms (13) umfasst.

10. Heckträgersystem nach einem der vorangegangenen Ansprüche, **dadurch gekennzeichnet, dass** die Klebefläche (17) zum Ankleben an die Dachfläche dient.

11. Verfahren zur Montage eines Heckträgersystems (1) nach einem der Ansprüche 1 bis 10 an einem Reisemobil, umfassend:
- Befestigen mindestens eines gestellseitigen Befestigungselements an einem Fahrzeuggestell des Reisemobils,
- Befestigen mindestens eines dachseitigen Befestigungselements (12) an einer Dachfläche des Reisemobils,
wobei
das mindestens eine dachseitige Befestigungselement (12) mit der mindestens einen Klebefläche (17) an die Dachfläche geklebt wird,
**dadurch gekennzeichnet, dass**
das mindestens eine dachseitige Befestigungselement (1) ein erstes Teilelement (16), welches die Klebefläche (17) aufweist, und mindestens ein weiteres Teilelement (19) aufweist, welches lösbar mit dem ersten Teilelement (16) mechanisch verbunden ist.

## Revendications

1. Système de portage arrière pour camping-cars, comprenant:
- un corps porteur (2),
- au moins un élément de fixation côté châssis pour fixer le système de portage arrière (1) à un châssis du camping-car,
- au moins un élément de fixation côté toit (12) pour fixer le système de portage arrière (1) à une surface de toit du camping-car,
- **caractérisé en ce que** le au moins un élément de fixation côté toit (12) comporte au moins une surface adhésive (17) pour appliquer un matériau adhésif,
**caractérisé en ce que**
le au moins un élément de fixation côté toit (12) comporte un premier sous-élément (16) qui comporte la surface adhésive (17) et au moins un autre sous-élément (19) qui est relié mécaniquement de manière amovible au premier sous-élément (16).

2. Système de portage arrière selon la revendication 1, **caractérisé en ce que** le système de portage arrière (1) comporte au moins un élément d'amortissement (22) pour amortir les forces/moments transmis du système de portage arrière (1) à la surface de toit.

3. Système de portage arrière selon l'une quelconque des revendications précédentes, **caractérisé en ce que** les sous-éléments (16, 19) sont configurés de manière à pouvoir être reliés entre eux dans au moins deux positions relatives différentes.

4. Système de portage arrière selon l'une quelconque des revendications précédentes, **caractérisé en ce que** la surface adhésive (17) mesure au moins 12 cm de long et au moins 1 cm de large.

5. Système de portage arrière selon l'une quelconque des revendications 2 à 4, **caractérisé en ce que** le au moins un élément de fixation côté toit (12) comporte deux surfaces adhésives (17), dans lequel le au moins un élément d'amortissement (22) est disposé dans une zone de projection commune, qui comprend au moins l'une des surfaces adhésives (17), au moins partiellement entre les surfaces adhésives (17).

6. Système de portage arrière selon l'une quelconque des revendications 2 à 4, **caractérisé en ce que** le au moins un élément de fixation côté toit (12) comporte une surface adhésive (17), dans lequel le au moins un élément d'amortissement (22) est disposé dans une zone de projection commune, qui comprend la surface adhésive (17), au moins partiellement décalée latéralement par rapport à la surface adhésive.

7. Système de portage arrière selon l'une quelconque des revendications précédentes, **caractérisé en ce que** le système de portage arrière (1) comprend au moins un bras porteur (13) qui est fixé au corps porteur (2) de manière mobile relativement à celui-ci.

8. Système de portage arrière selon la revendication 7, **caractérisé en ce que** le bras porteur (13) est relié mécaniquement de manière amovible au corps porteur (2).

9. Système de portage arrière selon la revendication 7 ou 8, **caractérisé en ce que** le système de portage arrière (1) comprend au moins un élément d'un système de tirage par câble pour actionner le bras porteur (13).

10. Système de portage arrière selon l'une quelconque des revendications précédentes, **caractérisé en ce que** la surface adhésive (17) sert à adhérer à la surface de toit.

11. Procédé de montage d'un système de portage arrière (1) selon l'une quelconque des revendications 1 à 10 sur un camping-car, comprenant:
- fixer au moins un élément de fixation côté châssis à un châssis du camping-car,
- fixer au moins un élément de fixation côté toit (12) à une surface de toit du camping-car,
dans lequel le au moins un élément de fixation côté toit (12) est collé à la surface de toit avec la au moins une surface adhésive (17),
**caractérisé en ce que**
le au moins un élément de fixation côté toit (1) comporte un premier sous-élément (16) qui comprend la surface adhésive (17) et au moins un autre sous-élément (19) qui est relié mécaniquement de manière amovible au premier sous-élément (16).

## Claims

1. Rear carrier system for motorhomes, comprising:
- a carrier body (2),
- at least one frame-side fastening element for fastening the rear carrier system (1) to a vehicle frame of the motorhome,
- at least one roof-side fastening element (12) for fastening the rear carrier system (1) to a roof surface of the motorhome,
- **characterized in that** the at least one roof-side fastening element (12) has at least one bonding area (17) for applying an adhesive material,
**characterized in that**
the at least one roof-side fastening element (12) comprises a first sub-element (16) comprising the bonding area (17) and at least one further sub-element (19) which is mechanically connected to the first sub-element (16) in a detachable manner.

2. Rear carrier system according to claim 1, **characterized in that** the rear carrier system (1) comprises at least one damping element (22) for damping the forces/moments transmitted from the rear carrier system (1) to the roof surface.

3. Rear carrier system according to one of the preceding claims, **characterized in that** the sub-elements (16, 19) are configured such that they can be connected to each other in at least two different relative positions.

4. Rear carrier system according to one of the preceding claims, **characterized in that** the bonding area (17) is at least 12 cm long and at least 1 cm wide.

5. Rear carrier system according to one of claims 2 to 4, **characterized in that** the at least one roof-side fastening element (12) has two bonding areas (17), wherein the at least one damping element (22) is arranged at least partially between the bonding areas (17) in a common projection area, which comprises at least one of the bonding areas (17).

6. Rear carrier system according to one of claims 2 to 4, **characterized in that** the at least one roof-side fastening element (12) comprises a bonding area (17), wherein the at least one damping element (22) is arranged at least partially laterally offset from the bonding area in a common projection surface, which comprises the bonding area (17).

7. Rear carrier system according to one of the preceding claims, **characterized in that** the rear carrier system (1) comprises at least one carrier arm (13) which is attached to the carrier body (2) such that it is movable relative to the latter.

8. Rear carrier system according to claim 7, **characterized in that** the carrier arm (13) is mechanically connected to the carrier body (2) in a detachable manner.

9. Rear carrier system according to claim 7 or 8, **characterized in that** the rear carrier system (1) comprises at least one element of a cable pull system for actuating the support arm (13).

10. Rear carrier system according to one of the preceding claims, **characterized in that** the bonding area (17) serves to adhere to the roof surface.

11. Method for mounting a rear carrier system (1) according to one of claims 1 to 10 on a motorhome, comprising:
- fastening at least one frame-side fastening element to a vehicle frame of the motorhome,
- fastening at least one roof-side fastening element (12) to a roof surface of the motorhome,
wherein
the at least one roof-side fastening element (12) is adhesively bonded to the roof surface with the at least one bonding area (17),
**characterized in that**
the at least one roof-side fastening element (1) comprises a first sub-element (16), which comprises the bonding area (17), and at least one further sub-element (19), which is mechanically connected to the first sub-element (16) in a detachable manner.
